# EUROPEAN PATENT SPECIFICATION

(11) **EP 3 002 910 B1**
(45) Date of publication and mention of the grant of the patent: **06.02.2019**
(21) Application number: 15192204.4
(22) Date of filing: 18.12.2013
(51) Int. Cl.: H04L 12/24, H04L 12/26, G06F 3/06, G06F 3/12, G06F 15/173, H04L 12/16, G06F 1/26, G06F 11/20, H04L 9/32

(54) **CONNECTING COMPUTER MANAGEMENT SYSTEMS VIA CELLULAR DIGITAL TELECOMMUNICATION NETWORKS**
VERBINDUNG VON VERWALTUNGSSYSTEMEN ÜBER ZELLULARE DIGITALE TELEKOMMUNIKATIONSNETZWERKE
CONNEXION DE SYSTÈMES DE GESTION INFORMATIQUE PAR L'INTERMÉDIAIRE DE RÉSEAUX DE TÉLÉCOMMUNICATIONS NUMÉRIQUES CELLULAIRES

(30) Priority: 21.12.2012 US 201213723405
(43) Date of publication of application: 06.04.2016
(62) Divisional of application: 13198205.0
(73) Proprietor: SAP SE, 69190 Walldorf (DE)
(72) Inventor: PALAZZOLO, Patrice, 69190 Walldorf (DE); CHAVANIS, Laurent, 69190 Walldorf (DE)
(74) Representative: Richardt Patentanwälte PartG mbB

(56) References cited:
- US-A1- 2011 295 989
- Si-Ho Cha ET AL: "Implementing an XML-Based Universal Network Management System in Java" In: "Information Networking: Wired Communications and Management", 1 January 2002 (2002-01-01), Springer Berlin Heidelberg, Berlin, Heidelberg, XP055113252, ISBN: 978-3-54-044256-1 vol. 2343, pages 652-661, DOI: 10.1007/3-540-45803-4_59, * page 659 - page 660 * * figure 4 *
- DEFENSE ADVANCED RESEARCH PROJECTS AGENCY INFORMATION SCIENCES INSTITUTE UNIVERSITY OF SOUTHERN CALIFORNIA 4676 ADMIRALTY WAY MARI: "TRANSMISSION CONTROL PROTOCOL DARPA INTERNET PROGRAM PROTOCOL SPECIFICATION prepared for Information Processing Techniques Office 1400 Wilson Boulevard 22209 by ; rfc793.txt", 19810901, 1 September 1981 (1981-09-01), XP015006775, ISSN: 0000-0003
- Anonymous: "ServletRequest (Java EE 6 )", , 23 November 2011 (2011-11-23), XP055113265, Retrieved from the Internet: URL:http://web.archive.org/web/20111123164 820/http://docs.oracle.com/javaee/6/api/ja vax/servlet/ServletRequest.html [retrieved on 2014-04-09]
- NEISSE R ET AL: "Implementation and bandwidth consumption evaluation of SNMP to web services gateways", NETWORK OPERATIONS AND MANAGEMENT SYMPOSIUM, 2004. NOMS 2004. IEEE/IFI P SEOUL, KOREA APRIL 19-23, 2004, PISCATAWAY, NJ, USA,IEEE, vol. 1, 19 April 2004 (2004-04-19), pages 715-728, XP010712718, DOI: 10.1109/NOMS.2004.1317759 ISBN: 978-0-7803-8230-5

## Description

### FIELD OF INVENTION

The present invention relates to computer implemented telecommunication method for optimization of computer network traffic between network entities on a first computer network and computer management system on a second computer network, a non-transitory computer readable storage medium embodying a telecommunication method, and a system, wherein either a second computer network may be a cellular digital telecommunication network, or the first and the second computer networks may be connected via one or more cellular digital telecommunication networks.

### BACKGROUND INFORMATION

In today's networked computing environment, a single organization may have many networks on which many network entities, such as networked devices and systems, are connected. While many network entity monitoring tools exist, such tools need to be installed on each network to receive and monitor messages from devices on each respective network. As a result, each network is monitored separately.

Further, a network and system monitoring system may be able to receive and process messages from some, but not all network system entities. However, the organization may desire to use a single network and system monitoring system to monitor all network entity messages.

US 2011/295989 A1 discloses a network management system in which the expandability of a network management device is increased, and the cost for expanding the function is suppressed. A gateway is provided between a Simple Network Management Protocol (SNMP) network and the internet, making it possible to operate a Management Information Base (MIB) using a HyperText Transfer Protocol (HTTP) and receive a Trap. The network management device is provided as a Web service for a Web browser, making it possible to cooperate with the other various Web services and easily expand the function by adding the Web service to the network management device.

US 2011/295989 A1 discloses further a network system comprising: a gateway device for creating an SNMP request message from a first HTTP request message and sending it to an SNMP agent, and creating and sending a first HTTP response message from an SNMP response message to the SNMP request message; and a network management device for communicating with the gateway device; wherein the network management device includes: an HTTP processing part for sending and receiving an HTTP request message and an HTTP response message corresponding thereto; a network information processing part for receiving a second HTTP request message for requesting a desired Management Information Base (MIB) of the SNMP agent via the HTTP processing part from a Web browser; and an MIB operation part for creating the first HTTP request message including an object identifier of the desired MIB and outputting it via the HTTP processing part to the gateway device; wherein the network information processing part receives the first HTTP response message to the first HTTP request message from the gateway device, the first HTTP response message including the MIB of the SNMP agent, creates a second HTTP response message including the MIB and sends it via the HTTP processing part to the Web browser.

US 2011/295989 A1 discloses further another network system comprising: a gateway device for storing a received SNMP Trap message; and a network management device for communicating with the gateway device; wherein the network management device includes: an HTTP processing part for sending and receiving an HTTP request message and an HTTP response message corresponding thereto; a Trap table for holding contents of the SNMP Trap message received from the gateway device; a Trap processing part for creating a first HTTP request message for requesting the SNMP Trap message, sending it via the HTTP processing part to the gateway device, receiving a first HTTP response message including the contents of the SNMP Trap message from the gateway device via the HTTP processing part, and storing the contents of the SNMP Trap message in the Trap table; and a network information processing part for receiving a second HTTP request message for requesting Trap information from the Web browser via the HTTP processing part, acquiring the contents of the SNMP Trap message from the Trap table, creating a second HTTP response message including the contents of the SNMP Trap message, and sending it via the HTTP processing part to the Web browser.

US 2011/295989 A1 discloses further a network management device in a network system which comprises a gateway device for creating an SNMP request message from a first HTTP request message and sending it to an SNMP agent, and creating and sending a first HTTP response message from an SNMP response message to the SNMP request message and, the network management device for communicating with the gateway device, the network management device comprising: an HTTP processing part for sending and receiving an HTTP request message and an HTTP response message corresponding thereto; a network information processing part for receiving a second HTTP request message for requesting a desired Management Information Base (MIB) of the SNMP agent via the HTTP processing part from a Web browser; and an NIB operation part for creating the first HTTP request message including an object identifier of the desired MIB and outputting it via the HTTP processing part to the gateway device; wherein the network information processing part receives the first HTTP response message to the first HTTP request message from the gateway device, the first HTTP response message including the MIB of the SNMP agent, creates a second HTTP response message including the MIB and sends it via the HTTP processing part to the Web browser.

US 2011/295989 A1 discloses further a gateway device comprising: an HTTP processing part for receiving an HTTP request message from a network management device and sending an HTTP response message to the network management device; an SNMP processing part for sending an SNMP request message to an SNMP agent and receiving an SNMP response message from the SNMP agent; a request processing part for creating the SNMP request message from the HTTP request message received by the HTTP processing part and outputting it to the SNMP processing part; and a response processing part for creating the HTTP response message from the SNMP response message received by the SNMP processing part and outputting it to the HTTP processing part, wherein the request processing part creates the SNMP request message by adding request type information included in received HTTP request message and an object identifier for specifying information of object to the SNMP request message, and wherein the response processing part creates the HTTP response message including the object identifier and value information, based on a pair of the object identifier and the value information indicating the information of the object that are included in the SNMP response message sent in response to the SNMP request message.

### SUMMARY

A network entity, as understood herein, is generally any device or process that monitors status of its own state and reports its status with regard to a metrics of said network entity. For instance a network entity may be a network switch that monitors its network connection ports for operability, connection speed, and the like. Another network entity may be a printer that monitors its paper and toner levels. A further network entity may be a software system that monitors database latency times, connectivity with other network entities, an amount of storage space available to the software system, and other metrics.

A metric message, as understood herein, is a message that is specific for each network entity. The metric message is an electronic message containing any evaluation/measurement of the state of an object (network entity). For instance, the metric messages may contain the following: usage records of hardware, software, databases; events from the network entities: failure/non-availability, high resource consumption, high response-time; or any values characterizing performance and/or state of resources of the network entities.

A data volume size of data packets used in cellular digital telecommunication networks for data transfer, as understood herein, is a packet length of data packets used in the cellular digital telecommunication networks for data transfer.

The present invention provides for embodiments that fill the need of effective network traffic utilization/optimization between computer management systems and network entities connected with each other via computer networks, in particular cellular digital telecommunication networks. Various embodiments herein include at least one of systems, methods, and software to connect computer management systems, such as across disparate networks and systems on the same network that are not otherwise integrated. Some such embodiments include a metric message connector that obtains network entity specific metric messages from a first computer management system that monitors a first computer network and communicates the obtained network entity specific metric messages to a computer management system on a second network. In other embodiments, the metric message connector communicates network entity specific messages generated or received in one computer management system to another computer management system. In particular, a computer implemented method for optimization of a computer network traffic between network entities on a first computer network and a computer management system on a second computer network, wherein the network entities are being monitored by the computer management system, a computer program product carrying computer executable code for execution by a processor controlling an apparatus, wherein execution of the instructions cause the processor to perform said computer implemented method, and a system are claimed in the independent claims 1, 8, and 9 respectively. Preferred embodiments are described in the corresponding dependent claims.

One example provides for a computer implemented method for optimization of computer network traffic between network entities on a first computer network and a computer management system on a second computer network, wherein the network entities are being monitored by the computer management system. The method comprises the following.

One or more network entity specific metric messages from one or more network entities are received via the first computer network, wherein each network entity is being operable for sending via the first computer network the each network entity specific metric messages.

It is determined that at least one received network entity specific metric message is to be forwarded to the computer management system, wherein the determination is based on configuration data and data of one or more received network entity specific metric messages.

In a case when the at least one received network entity specific metric message is to be forwarded to the computer management system the following is performed.

A template to populate with at least a portion of data of the at least one received network entity specific metric message to be forwarded to the computer management system is retrieved and data that maps the at least the portion of the data of the at least one received network entity specific metric message to be forwarded to the computer management system is mapped to fields of the template.

The template according to the mapping data is populated.

The populated template is transmitted via the first and second computer network to the computer management system.

This embodiment enables effective utilization of the network traffic because a useful/required information is filtered by filling in the templates. The network entity specific metric messages from one or more network entities may be agglomerated using one template and transmitted in a single message to the computer management system. Moreover utilization of one or more templates makes communication method of this embodiment universal, i.e. processing of received information by the computer management system is simplified by introducing messages formulated according to the templates being easily parsable by the computer management system.

- Alternative solution based on utilization of a standard proxy server on the first computer network may require a dedicated proxy connection for each network entity. This approach will result in generation of many classes and additional respective objects on the proxy server. As a result thereof a high number of additional objects will be transmitted to the computer management system overloading network traffic with data to be transmitted in released data packets. More over this solution demands more computing resources in comparison with a template based processing of the network entity specific metric messages. Using templates in accordance with this embodiment provides an effective solution for network traffic optimization. Moreover a reconfiguration of the standard proxy server is needed in a case when a structure and/or content of the network entity specific messages are changed as a result of modification the network entities and/or installation of new network entities on the first computer network. In contrast, in a context of this embodiment only one or more templates have to be added/modified in accordance with the changes in the network entity specific metric messages.

In another example either the first and the second computer network are connected via a cellular digital telecommunication network or the second computer network is the cellular digital telecommunication network, wherein data packets having a data volume size are used for data transfer in the cellular digital telecommunication network. The transmitting via the first and second computer network of the populated template to the computer management system comprises converting the populated template into the data packet by adding at least a header information of said data packet to the populated template. The populating of the template according to the mapping data is continued until a maximum utilization efficiency of the data volume size of the data packet to be generated using said template being populated is achieved.

This embodiment enables effective utilization of the payload of the network traffic, especially precious network traffic of the cellular digital telecommunication traffic. The packets are filled in with data at maximum possible level. Very little computer resources are needed for converting templates into the data packets, because the templates closely resemble the data packets, no intermediate steps are needed, because effectively the data packet is being filled with payload data strait the way.

In yet another example one universal template is used for mapping of the data that maps the at least the portion of the data of any received network entity specific metric message to be forwarded to the computer management system to fields of the universal template.

This embodiment enables further simplification and standardization of communication of the network entities with the computer management system by employing one universal template.

In yet another example wherein each network entity specific metric message is attributed to a specific type, the types of the network entity specific metric messages are stored on a local data storage. In a case when at least one received network entity specific metric message attributed to a new specific type not yet stored on the local data storage is to be forwarded to the computer management system the following is performed.

A new universal template compatible with the network entity specific metric messages attributed to all new specific types and the network entity specific metric messages attributed to the specific types stored on the local data storage is generated and all new specific types are stored on the local data storage before the retrieving of the universal template to populate with at least a portion of data of the at least one received network entity specific metric message of the new specific type to be forwarded to the computer management system and the mapping of data that maps at least the portion of the data of the at least one received network entity specific metric message of the new specific type to be forwarded to the computer management system to fields of the universal template.

In a case, when the universal template is already partially populated according to the mapping data and the maximum utilization efficiency of the data volume size of the data packet to be generated using said universal template being populated is not yet achieved the following is performed.

The partially populated universal template is transmitted via the first and second computer network to the computer management system.

The universal template is substituted with the newly generated universal template after the partially populated universal template is transmitted to the computer management system via the first and the second computer network.

In a case, when the universal template is not populated according to the mapping data, the universal template is substituted with the newly generated universal template.

This embodiment enables effective adaptation of the template, while effectiveness of network trafficking between the network entities and the computer management system is kept at maximum possible level.

In yet another embodiment the template comprises an extensible markup language (XML) template and the transmitting of the populated template comprises transmitting the XML template in a Simple Object Access Protocol (SOAP) message to a web service providing at least one messaging service with regard to the computer management system.

This embodiment enables conversion of the network entity specific metric messages in a broadly used standard of data processing such as XML included in the SOAP messages. As a result thereof the messages received by the computer management system may be forwarded without any further processing to any other third party like HP OpenView, IBM Tivoli, CA Ehealth using standard communication channels like web services.

In yet another example the network entity specific metric message is a Simple Network Management Protocol (SNMP) message.

This embodiment discloses the most suitable message format for communicating with the network entities.

In yet another example the computer implemented method comprises further the following. The populated template is stored to a local data storage before it is transmitted to the computer management system. The confirmation that the populated template is received by the computer management system and the populated template is deleted from the local data storage.

This embodiment enables secure communication between the network entities and the computer management system. The loss of messages sent to the computer management system is avoided.

In yet another embodiment the computer implemented method comprises further the following. A plurality of populated templates is periodically retrieved from the local data storage. The retrieved populated templates are aggregated into a single data structure and **the** transmitting of the populated template includes transmitting the single data structure to the computer management system.

This embodiment enables effective network traffic utilization by aggregating data to be transmitted.

In yet another embodiment the first and second computer networks are separated by at least one firewall.

This embodiment enables secure communication between the network entities and the computer management system.

In yet another embodiment the configuration data: identifies at least the portion of the data of the at least one received network entity specific metric messages to be forwarded to the computer management system; identifies the template to be populated with the at least the portion of the data of the at least one received network entity specific metric messages to be forwarded to the computer management system and provides the mappings of at least the portion of the data of the at least one received network entity specific metric messages to be forwarded to the computer management system to fields of the template; and includes connectivity information to connect with the computer management system.

This embodiment enables prompt and easy modifications related to selection of data to be forwarded to the computer management system and routing of the paths used for network connections in the computer networks of in this method.

In yet another embodiment the header information comprises the connectivity information.

This embodiment enables simple generation of the data packets to be sent via the cellular digital telecommunication network to the computer management system.

In yet another embodiment the configuration data is one of a plurality of sets of configuration data, the configuration data of each set of configuration data with regard to the computer management system identifying one of a plurality of computer management systems.

This embodiment enables effective fanning out of data to several computer management systems. There is no need for generation a set of templates for communication with each of the computer management systems.

Yet another embodiment provides for a computer program product, in particular a computer readable medium, the computer program product carrying computer executable code for execution by a processor controlling an apparatus, wherein execution of the instructions cause the processor to perform the computer implemented method for optimization of a computer network traffic between network entities on a first computer network and a computer management system on a second computer network described in any of the aforementioned embodiments.

Yet another example provides for a system comprising: at least one processor, at least one memory device, at least one network interface device, a first computer management system stored on the at least one memory device and executable by the at least one processor to receive network entity specific metric messages broadcast on a first computer network by network entities, a metric message connector module stored on the at least one memory device and executable by the at least one processor to: process metric messages received by the first computer management system; to identify, based on configuration data and data of the received network entity specific metric messages, network entity specific metric messages to be forwarded to a second computer management system on a second computer network; and for one or more received network entity specific metric messages identified to be forwarded to the second computer management system: retrieve, from the at least one memory device, a template to populate with at least a portion of data of the one or more identified network entity specific metric messages and map data that maps the at least the portion of the data of the one or more identified network entity specific metric messages to fields of the template; populate the template with the at least the portion of the data of the one or more identified network entity specific metric messages according to the mapping data; and transmit, via the at least one network interface device, the first and the second computer network the populated template to the second computer management system.

In yet another example either the first and the second computer network are connected via a cellular digital telecommunication network or the second computer network is the cellular digital telecommunication network, wherein data packets having a data volume size are used for data transfer in the cellular digital telecommunication network, wherein the transmitting via the at least one network interface device, the first and second computer network of the populated template to the second computer management system comprises converting the populated template into the data packet by adding at least a header information of said data packet to the populated template, wherein the populating of the template according to the mapping data is continued until a maximum utilization efficiency of the data volume size of the data packet to be generated using said template being populated is achieved.

In yet another example one universal template is used for mapping of the data that maps at least the portion of data of any identified network entity specific metric message to fields of the universal template.

In yet another example each network entity specific metric message is attributed to a specific type, the types of the network entity specific metric messages are stored on the at least one memory device, the metric message connector module stored on the at least one memory device and is further executable by the at least one processor to: when at least one received network entity specific metric message attributed to a new specific type not yet stored on the at least one memory device is identified to be forwarded to the second computer management system: before the retrieving, from the at least one memory device, of the universal template to populate with the at least a portion of data of the at least one identified network entity specific metric message attributed to the new specific type not yet stored on the at least one memory device and the mapping of data that maps at least the portion of the data of the at least one identified network entity specific metric message to fields of the universal template generate a new universal template compatible with the network entity specific metric messages attributed to all new specific types and the network entity specific metric messages attributed to the specific types stored on the at least one memory device and store all new specific types on the at least one memory device; when the universal template is not populated according to the mapping data substitute the universal template with the newly generated universal template; and when the universal template is already partially populated according to the mapping data and the maximum utilization efficiency of the data volume size of the data packet to be generated using said template being populated is not yet achieved: transmit via the at least one network interface device, the first and second networks the partially populated universal template to the second computer management system; and after the transmitting via the at least one network interface device, the first and second networks of the partially populated universal template to the second computer management system substitute the template with the newly generated universal template.

In yet another embodiment the template comprises an extensible markup language (XML) template and the transmitting of the populated template comprises transmitting the XML template in a Simple Object Access Protocol (SOAP) message to a web service providing at least one messaging service with regard to the second computer management system.

In yet another example the metric message connector module is further executable by the at least one processor to: store the populated XML template to the at least one memory device prior to transmitting the populated XML template to the second network and system management system; receive a confirmation that the populated XML template was received by the second network and system management system; and delete the populated XML template from the at least one memory device.

In yet another example the prior to the transmitting of the populated XML template to the second computer management system the metric message connector module is further executable by the at least one processor to: store the populated XML template to the at least one memory device; periodically retrieve a plurality of populated XML templates from the local data storage; aggregate the retrieved populated XML templates into a single data structure; and wherein the transmitting the populated XML template includes transmitting the single data structure to the second computer management system.

In yet another embodiment the configuration data: identifies at least a portion of data of one or more received network entity specific metric messages to be forwarded to the second computer management system; identifies the template to be populated with the at least the portion of the data of the one or more received network entity specific metric messages to be forwarded to the second computer management system and provides the mappings of at least the portion of the data of the one or more received network entity specific metric messages data to fields of the template; and includes connectivity information to connect with the second computer management system.

In yet another embodiment the configuration data is one of a plurality of sets of configuration data, the configuration data of each set of configuration data with regard to the second computer management system identifying one of a plurality of second computer management systems.

### BRIEF DESCRIPTION OF THE DRAWINGS

- FIG. 1: is a logical block diagram of a system.
- FIG. 2: is a logical block diagram of a system.
- FIG. 3: is a logical block diagram of a system.
- FIG. 4: is a block flow diagram of a method.
- FIG. 5: is a block diagram of a computing device.

### DETAILED DESCRIPTION

Various embodiments herein include at least one of systems, methods, and software to connect computer management systems, such as across disparate networks and systems on the same computer network that are not otherwise integrated. Some such embodiments include a metric message connector that obtains network entity specific metric messages from a first computer management system that monitors a first computer network and communicates the obtained metric messages to a second computer management system on a second computer network. In other embodiments, the metric message connector communicates network entity specific messages generated or received in one computer management system to another computer management system.

Network entity specific metric messages are messages transmitted on at least the first computer network by network entities or generated within one system and communicated to another. The network entities may report their status in Simple Network Management Protocol (SNMP) messages that are broadcast on the at least first computer network.

The first computer network and the second computer network may be separate networks divided by at least one firewall. However, the first and second computer network may instead be separate logical networks where the second computer management system is unable to receive or process network entity specific metric messages that are received and processed by the first computer management system on the first computer network. In addition, either the first and the second computer networks may be connected via a cellular digital telecommunication network or the second computer network may be a cellular digital telecommunication network, wherein data packets having a data volume size are used for data transfer in said digital telecommunication networks. In all aforementioned cases regarding computer networks, the first and the second computer network may be separated by firewalls or logically separated computer networks, wherein the first computer management system is able to provide network entity specific metric messages to the second computer management system to allow monitoring of network entity specific metric messages of the first computer network through the second computer management system. Through such embodiments, as are described herein in detail with reference to the drawings, monitoring of network entities on a plurality of computer networks may be performed via a single computer management system.

In the following detailed description, reference is made to the accompanying drawings that form a part hereof, and in which is shown by way of illustration specific embodiments in which the inventive subject matter may be practiced. These embodiments are described in sufficient detail to enable those skilled in the art to practice them and it is to be understood that other embodiments may be utilized and that structural, logical, and electrical changes may be made without departing from the scope of the inventive subject matter. Such embodiments of the inventive subject matter may be referred to, individually and/or collectively, herein by the term "invention" merely for convenience and without intending to voluntarily limit the scope of this application to any single invention or inventive concept if more than one is in fact disclosed.

The following description is, therefore, not to be taken in a limited sense, and the scope of the inventive subject matter is defined by the appended claims.

The functions or algorithms described herein are implemented in hardware, software or a combination of software and hardware in one embodiment. The software comprises computer executable instructions stored on computer readable media such as memory or other type of storage devices. Further, described functions may correspond **to** modules, which may be software, hardware, firmware, or any combination thereof. Multiple functions are performed in one or more modules as desired, and the embodiments described are merely examples. The software is executed on a digital signal processor, ASIC, microprocessor, or other type of processor operating on a system, such as a personal computer, server, a router, or other device capable of processing data including network interconnection devices.

Some embodiments implement the functions in two or more specific interconnected hardware modules or devices with related control and data signals communicated between and through the modules, or as portions of an application specific integrated circuit. Thus, the exemplary process flow is applicable to software, firmware, and hardware implementations.

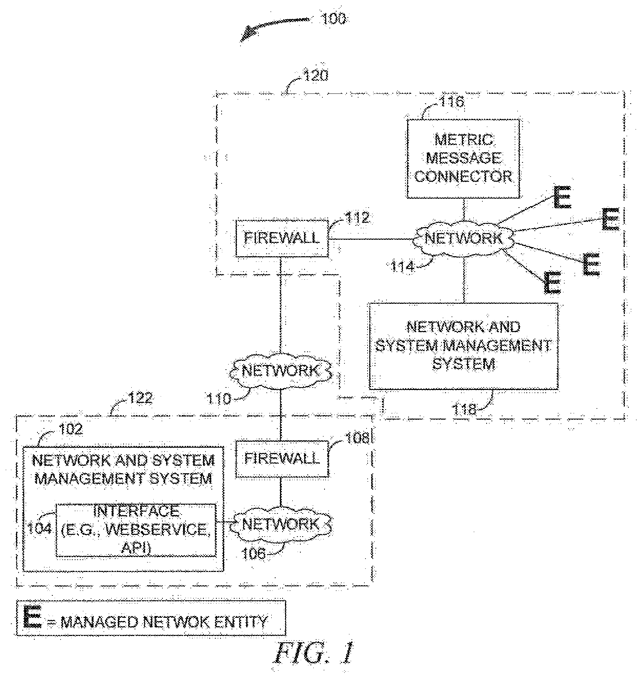

FIG. 1 is a logical block diagram of a system 100. The system 100 of FIG. 1 illustrates a block diagram comprising a metric message connector 116 that operates to transport network entity specific metric messages from a computer management system 118 on a first computer network 114 to a computer management system 102 on a second computer network 106.

The first computer network 114 is a data network that can be logically considered a network 120 that includes many elements connected thereto. Similarly, the second computer network 106 is a data network that can be logically considered network 122, which may include many other elements connected thereto.

The network 120 includes a computer management system 118 that receives network entity specific metric messages broadcast across the first computer network 114 by network entities "E". As previously briefly discussed, the network entities E are generally networked devices, processes, programs, or other hardware or software elements that monitor their own state in view of metrics and broadcast messages reporting their current state. Such messages may be broadcast by the network entities E upon occurrence of an event such as a fault, upon violation of a rule such as a configured service level agreement, on a scheduled basis, or for other reasons, These messages may be SNMP messages or other messages according to a standard or a proprietary definition. Regardless of the encoding of the messages, the messages are broadcast by the network entities E on the first computer network 114. When broadcast across the first computer network 114, the network entity **E** messages are received by the computer management system 118.

The computer management system 118 is a system that consumes messages broadcast by network entities E on the first computer network 114 to which it is connected, stores data representative of the messages, provides management tools for administrators to track and handle network and network entity **E** conditions reported in and discovered from network entity messages, and the like. Examples of the computer management system 118 include Solution Manager available from SAP AG of Walldorf, Germany, Network Management Center available from Hewlett-Packard Company of Palo Alto, California, and Tivoli available from IBM Corporation of Armonk, New York. Regardless of the actual computer management system 118 implemented, it provides a great amount of functionality for monitoring and managing components of the network 120 as whole.

The network 120 also includes a message connector 116 that operates with regard to network entity specific metric messages broadcast by the network entities E on network 114. Network entity specific metric messages broadcast by the network entities E on the first computer network 114 are received and stored by the computer management system 118. The metric message connector 116 obtains from the computer management system 118 either the actual network entity specific metric messages as broadcast by the network entities E or data representative thereof. The metric message connector 116 may retrieve the network entity specific metric messages or the computer management system 118 may push the network entity specific metric message to the metric message connector 116.. Some network entity specific metric messages may be pushed by the computer management system to the metric message connector 116 and others are retrieved by the metric message connector 116. The pushing and retrieving of network entity specific metric messages may depend on configurations of the computer management system 118 and the metric message connector 116 with regard to network entity specific metric message types, state information reflected in network entity specific metric messages, and network entities E from which the network entity specific metric messages are received.

Regardless of how the network entity specific metric messages are obtained, the metric message connector 116 may then process the network entity specific metric messages. Such processing may include putting the network entity specific metric messages in a suitable form for transport outside of a firewall 112 of the network 120, across another network 110 such as the Internet or a digital cellular telecommunication network, and to the computer management system 102 of network 122, which may include traversing a firewall 108 of network 122. The processing of network entity specific metric messages by the metric message connector 116 may include generating an extensible markup language (XML) document that encapsulates data representative of one or more network entity specific metric messages. The processing of network entity specific metric messages by the metric message connector 116 may include generating data packets that encapsulate data representative of one or more network entity specific messages in a case when either the first and the second computer networks 114, 106 are connected via a cellular digital telecommunication network 110 or the second computer network 106 is a cellular digital telecommunication network, wherein the data packets having a data volume size are used for data transfer in said cellular digital telecommunication networks. The processing of network entity specific messages by the metric message connector 116 may include encapsulating data representative of several network entity specific metric messages in one data packet in a way providing maximum utilization efficiency of the data volume size of the data packets. In one embodiment including generation of an XML document, the XML document may be the subject of a web service call made according to the Simple Object Access Protocol (SOAP) of a web service provided by an interface 104 of the computer management system 102.

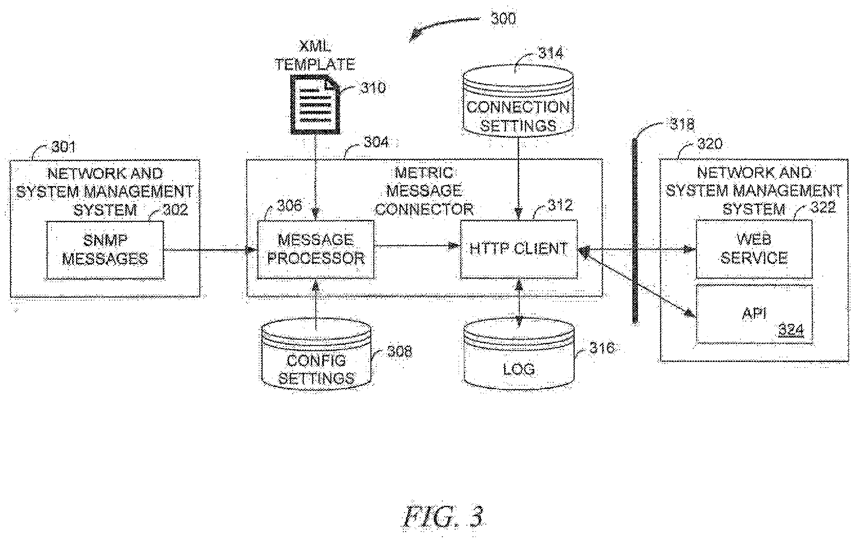

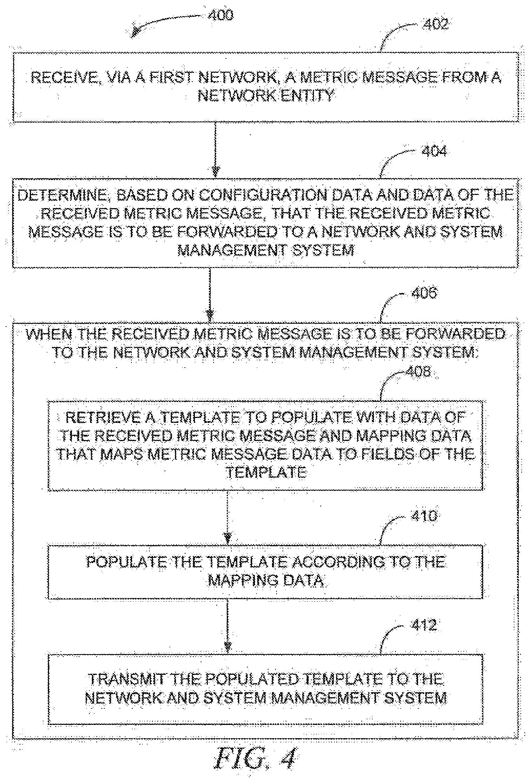

The interface 104 is an interface to which network entity specific metric message data may be transmitted by the metric message connector 116. The interface 104 may then generate and broadcast SNMP messages on the second computer network 106 based on network entity specific metric message data received from the metric message connector 116. Such SNMP messages may then be received by the computer management system 102. Alternatively, the interface 104 upon receipt of network entity specific metric message data from the metric message connector 116 may instead store data in the form of SNMP messages within a metric messages data store of the computer management system 102 where network entity specific metric message data is stored when received and processed. Further detail regarding the processing of network entity specific metric messages is provided below with regard to FIG. 3 and FIG. 4.

The metric message connector 116 may be a standalone software program that executes on a computer connected to the first computer network 114. In other embodiments, the metric message connector 116 may be a module added on to another program or added to a network device that executes the metric message connector 116. In yet another embodiment, the metric message connector 116 is a hardware device including at least one network interface device, at least one processor, and at least memory device that stores instructions executable by the at least one processor to cause the hardware device to perform the functions of the metric message connector 116. In a further embodiment, the metric message connector 116 is a configurable process of the computer management system 118.

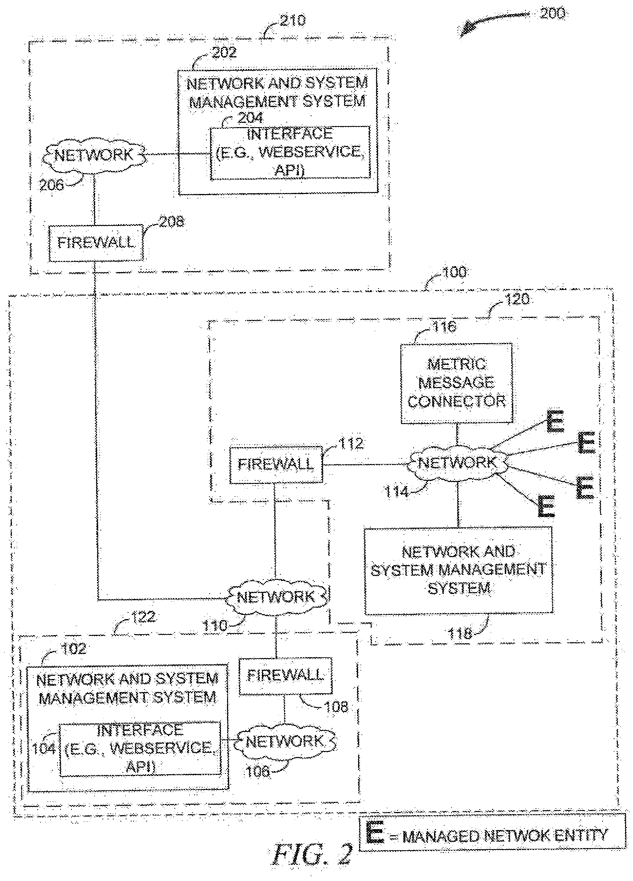

FIG. 2 is a logical block diagram of a system 200. The system 200 is an example of a system including not only the metric message connector 116 of network 120 that communicates network entity specific metric messages to the computer management system 102 of network 122 as illustrated and described with regard to FIG. 1, but is also able to communicate network entity specific metric messages to another computer management system 202 within of a network 210. The network 210 includes a computer network 206 that interconnects various elements of the network 210. The various elements include at least a firewall 208 and the computer management system 202 interconnected by the computer network 206. The computer management system 202 may include an interface 204 that provides a channel, such as one or more web services or an application programming interfaces (API), for receiving network entity specific metric messages from the metric message connector 116 of the network 120. The system 200 therefore is generally the system 100 of FIG. 1 with the addition of the network 210.

The computer management systems 102, 118, 210 of the networks 122, 120, 210, respectively, may be identical computer management systems. However, in a typical embodiment, the computer management system 118 is a distinct from the other computer management systems 102, 202 by either version or in whole.

In some such embodiments as illustrated with regard to the system 200, the metric message connector 116 is configured to communicate certain network entity specific metric messages to the computer management system 102 of network 122 and other network entity specific metric messages to the computer management system 202 of network 210. Such embodiments may be implemented for various reasons. For example, one group within an organization may be responsible for monitoring and maintaining certain network entity types, such as networking devices, and another group may be responsible for monitoring and maintaining applications and application infrastructure. Each group in such an example utilizes a different instance of a computer management system 102, 202. The metric message connector 116 is configurable to accommodate such needs and others. A particular configuration in some further embodiments is an ability to configure the metric message connector 116 to utilize different formatting and to communicate different data based on different factors. Such factors may include the computer management system 102, 202 to which a network entity message is to be communicated, particular network entity specific metric messages received by **the** computer management system 118, and the like. The configuration of the metric message connector 116 may include specifying different templates, such as XML document templates or SNMP message types and formats, from which communications to the computer management systems 102, 202 are generated.

At least one of the computer networks 112, 106, 206 may be a cellular digital telecommunication network.

FIG. 3 is a logical block diagram of a system 300. The system 300 illustrates a flow of network entity specific metric messages, such as SNMP messages, from a computer management system 301 to another computer management system 320.

The system 300 includes the computer management system 301 that receives network entity specific metric messages over a network, such as a local area network (LAN). The network entity specific metric messages are SNMP messages 302 or data from which SNMP messages may be generated. The system 300 also includes a metric message connector 304.

The metric message connector 304 is typically present on the same computer network as the computer management system 301, such as the same LAN. However the metric message connector 304 may be an object that provides metric message generation services to the computer management system 301 or another software system, such as an application or enterprise-class application such as an Enterprise Resource Planning (ERP) application. The metric message connector 304 either receives the SNMP messages 302, or data from which SNMP messages or other network entity specific metric messages can be generated, when pushed by the computer management system 302 or when retrieved by a message processor 306 of the metric message connector 304 or other process thereof. The message processor 306 processes the SNMP messages, or data from which SNMP messages or other network entity specific metric messages can be generated, in view of stored configuration settings 308 and a document template, such as an XML document template 310 or another data structure including data defining a form for one or more message types.

The configuration settings 308 may define SNMP messages or other data of interest that are to be processed and other SNMP messages or other data that are to be ignored. The configuration settings 308 may further include data translation mappings that map SNMP message data or other data values to values of the computer management system 320 to which SNMP messages are to be transmitted. For example, one such mapping may convert an SNMP message value "CRITICAL" to a number "9" which has an equivalent meaning within the computer management system 320. Another such mapping may map message data from a particular system to a value identifying that particular system within the computer management system 320. The configuration settings 308 may further identify the computer management system 320 as the destination to which the SNMP messages, or other data from which SNMP messages can be generated, are to be transmitted.

The XML document template 310 may be a template adapted to a form that may be transmitted in a call of a web service 322 of the computer management system 320. For example, the XML template 310 may be a template for generation of an XML SOAP request. The XML template 310 may include fields with defined placeholders that the message processor 306 can search for in the XML template 310 and replace with data of an SNMP message and any data translated according to the configuration settings 308.

The message processor 306 may process one SNMP message at a time and generate an XML document, or other data structure, for each SNMP message or other data from which an SNMP message can be generated. In other embodiments, the message processor 306 may process several SNMP messages at a time to generate one XML document containing data of or representative of the several SNMP messages. Regardless of whether the XML document includes data of one or many SNMP messages, the message processor 306 forward the XML document to a transmission client, such as the HTTP client 312, to transmit the XML document to the computer management system 320. In a case when the computer management system 320 and the system 300 are connected via a cellular digital telecommunication network, wherein data packets having a data volume size are used for data transfer in the cellular digital telecommunication network, the transmission client may convert one or more XML documents into one or more data packets and transmit them to the computer management system 320. In a case when at least a portion of XML documents have smaller data volume sizes than the data volume size of the data packets, the transmission client may aggregate several XML documents of said portion in one data packet in a way providing maximum utilization efficiency of the data volume size of the data packets.

In another embodiment, the message processor 306, which processing messages other than SNMP messages such as proprietary network entity specific metric messages received within the computer management system 301, may receive or retrieve data representative of the proprietary network entity specific metric messages. The message processor 306 may then generate a message in a form to be transmitted to the computer management system 302 according to at least the configuration settings 308. The message processor 306 may further utilize one or more other message templates, such as templates for generation of SNMP messages or API 324 calls to an interface of the computer management system 320 other than a web service 322 call. Regardless of the message type generated for transmission to the computer management system 320, the generated message may then be forwarded to a transmission client, such as the HTTP client 312 or other client depending on a protocol through which the particular message is to be transmitted. One universal template may be utilized by the message processor for generation of the message to be transmitted to the computer management system 320.

The transmission client, such as the HTTP client 312, operates to communicate the received message, such as an XML document or other message, which may be an XML SOAP request or API call, to the computer management system 320. In particular, the HTTP client 312, according to the example system 300, operates to communicate the XML document to the computer management system 320 by making a web service 322 call. The HTTP client 312, in making the web service 322 call, establishes or utilizes an existing network connection as defined within stored connection settings 314. The connection settings may identify various connection parameters, such as network ports to utilize, Internet Protocol (IP) addresses, firewall permissions, and the like. The HTTP client 312 utilizing such a defined connection then transmits the XML document to the web service 322. The transmission of the XML document may include a SOAP request. The web service 322 , upon receipt, processes the XML document to provide the data contained therein to the computer management system 320. In a case when the message to be transmitted is not an XML document, the connections may be established and utilized in a similar manner, although rather than making a web service call, the call will be to an API or other data processing entity of the computer management system 320 or a network entity on a network to which the computer management system 320 is connected.

In a case, when the HTTP client 312, prior to transmitting the XML document or other message type to the computer management system 320, writes the XML document or other message type to a log 316. The log 316 is generally a data storage device local to a network to which the metric message connector 304 is connected. Upon successful transmission to the computer management system 320, the HTTP client 312 may delete the XML document or other message from the log 316. However, in some cases, the XML document or other message may remain in the log 316 indefinitely, for a defined period (i.e., a number of minutes, hours, or days) and be purged by a garbage collection process.

In a case when, the HTTP client 312 in transmitting the XML document or other message to the computer management system is performed across one or more firewalls 318 or other network barriers. The HTTP client 312 in transmitting via HTTP is able to traverse such firewalls 318. Other modes of communication, messaging, and delivery modes may be used in other cases to traverse such firewalls 318 with data representative of the SNMP messages. For example, some embodiments include an API call, a file stored to a designated network storage location accessible by a process of the computer management system, a data structure transmitted via a value added network, or other message and message transmission scheme.

FIG. 4 is a block flow diagram of a computer implemented method 400. The method 400 is an example of a method that maybe performed, for example by a metric message connector 116 of **FIG. 1** and FIG. 2 and 304 of FIG. 3. The method 400 may be performed in whole or part by one or more processes of a computer management system or a combination of a computer management system and a metric message connector. The method is applicable for optimization of computer network traffic between network entities E on a first computer network 114 and a computer management system 102 on a second network 106 (FIG. 1 and FIG. 2), wherein the network entities are monitored by the second computer management system.

The example method 400 includes receiving 402, via the first computer network, a one or more network entity specific metric messages, from one or more network entities, wherein each network entity is being operable for sending via the first computer network the each network entity specific metric messages, and determining 404, based on configuration data and data of the one or more received network entity specific metric message, that at least one received network entity specific metric message is to be forwarded to the second computer management on the second computer network. The network entity specific metric messages may be for instance SNMP messages. The network entity specific metric message received 402 from the network entity may be received indirectly via a first computer management system on the first computer network which is distinct from the second computer management system to which the method 400 transmits 412 the populated 410 template, described below.

When at least one received network entity specific metric message is to be forwarded to the second computer management system on the second computer network 406, the method 400 includes retrieving 408 a template to populate with at least a portion of data of the at least one received network entity specific metric message to be forwarded to the second computer management system and mapping data that maps at least a portion of the data of the at least one received network entity specific metric message to be forwarded to the second computer management system network entity specific metric message to fields of the template. The method 400 then populates 410 the template according to the mapping data. Once populated 410, the populated 410 template may then be transmitted 412, via the first computer network to the second network, to the second computer management system.

The first and the second computer network may be connected via one or more cellular digital telecommunication networks. The second computer network may be a cellular digital telecommunication network as well. Data packets having a data volume size are used for data transfer in said cellular digital telecommunication networks. In this case the transmitting of the populated template via the first computer network to the second computer network, to the second computer management system comprises converting the populated template into the data packet by adding at least header information of said data packet to the populated template. The header information may comprise connectivity information to connect with the second computer management system. The populating of the template 410 according to the mapping data is performed in a way providing maximum utilization efficiency of the data volume size of the data packets. For instance, the populating of templates according to the respective mapping data may be based on the following principles. In a case, when the population of the template with the at least the portion of the data of the one or more received network messages to be forwarded to the second computer management system according to the mapping data causes subsequent generation of the data packet having a data volume size bigger than the data volume size of the data packets used for data transfer in said cellular digital telecommunication networks, the at least the portion of the data is split into other portions to populate several templates in a way enabling generation of one or more data packets having data volume sizes equal or substantially similar and not exceeding the data volume size of the data packets used for data transfer in said cellular digital telecommunication networks. In another case, when the population of the template with the at least the portion of the data of the one or more received network messages to be forwarded to the second computer management system according to the mapping data causes subsequent generation of the data packet having a data volume size less or substantially less than the data volume size of the data packets used for data transfer in said cellular digital telecommunication networks, said template is populated with the at least the portion of the data and another data in a way enabling generation of the data packet having data volume size equal or substantially similar and not exceeding the data volume size of the data packets used for data transfer in said cellular digital telecommunication networks. The other data may be generated by the further retrieving 402, via the first network, of one or more another network entity specific messages form one or more network entities, determining 404, based on the configuration data and data of the one or more another received network entity specific metric messages, that at least one anther received network entity specific metric message is to be forwarded to the second computer management system, and mapping data 408 that maps the another data to the fields of the template, wherein the another data is at least the portion of the data of the at least one another received network entity specific metric message to be forwarded to the computer management. Both discussed above cases have a common distinctive feature: the population of the template is continued until a maximum utilization efficiency of the data volume size of the data packet to be generated using said template is achieved.

One universal template may be utilized for mapping of the data that maps the at least the portion of the data of any received network entity specific metric message to be forwarded to the second computer management system to fields of the universal template. Each network entity specific metric message may be attributed to a specific type, wherein the types of the network entity specific metric messages may be stored on a local data storage. The local data storage in may be local to a computing device performing the method 400, but may also be local in the sense that the local data storage is accessible via a local network, such as a LAN. When at least one received network entity specific metric message attributed to a new specific type not yet stored on the local data storage is to be forwarded to the computer management system the following is performed.

A new universal template compatible with the network entity specific metric messages attributed to all new specific types and the network entity specific metric messages attributed to the specific types stored on the local data storage is generated and all new specific types are stored on the local data storage before the retrieving of the universal template to populate with at least a portion of data of the at least one received network entity specific metric message of the new specific type to be forwarded to the second computer management system and the mapping of data that maps at least the portion of the data of the at least one received network entity specific metric message of the new specific type to be forwarded to the second computer management system to fields of the universal template.

In a case, when the universal template is already partially populated according to the mapping data and the maximum utilization efficiency of the data volume size of the data packet to be generated using said universal template being populated is not yet achieved the following is performed.

The partially populated universal template to the computer management system is transmitted via the first computer network to the second computer network, to the second computer management system.

The universal template is substituted with the newly generated universal template after the partially populated universal template is transmitted via the first computer network to the second computer network, to the second computer management system.

In a case, when the universal template is not populated according to the mapping data, the universal template is substituted with the newly generated universal template.

The need for the generation of the new universal template may occur when a structure and/or content of the network entity specific messages are changed as a result of modification the network entities and/or installation of new network entities on the first computer network. The template may be an extensible markup language (XML) template In this case, transmitting 412 the populated 410 template includes transmitting 412 the XML template in a Simple Object Access Protocol (SOAP) message to a web service providing at least one messaging service with regard to the computer management system.

The method 400 may further comprise, prior to transmitting 412 the populated 410 template to the second computer management system, soring of the populated 410 template to local data storage. Subsequently, the method 400 may further comprise receiving a confirmation that the populated 410 template was received by the computer management system and then deleting the populated 410 template from the local data storage. Local data storage in may be local to a computing device performing the method 400, but may also be local in the sense that the local data storage is accessible via a local network, such as a LAN.

The method 400 may further comprise, prior to transmitting 412 the populated 410 template to the computer management system, storing the populated 410 template to a local data storage and periodically retrieving a plurality of populated 410 templates from the local data storage. Again, local data storage may be local to a computing device performing the method 400, but may also be local in the sense that the local data storage is accessible via a local network, such as a LAN. The method 400 may then aggregate the retrieved populated 410 templates into a single data structure. In this case, the transmitting 412 of the populated template includes transmitting 412 the single data structure to the computer management system.

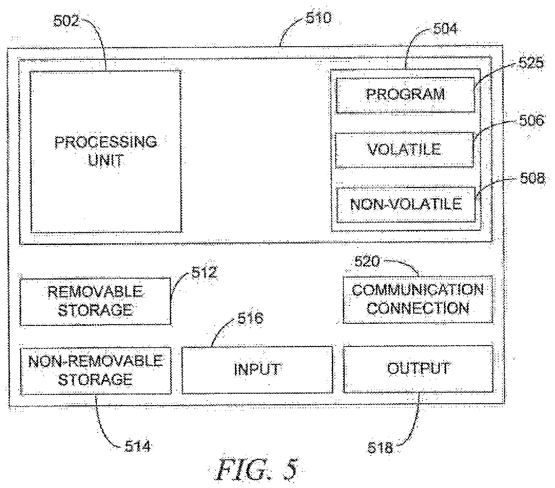

FIG. 5 is a block diagram of a computing device. Multiple such computer systems are utilized in a distributed network to implement multiple components in a transaction-based environment. An object-oriented, service-oriented, or other architecture may be used to implement such functions and communicate between the multiple systems and components. One example computing device in the form of a computer 510, may include a processing unit 502, memory 504, removable storage 512, and non-removable storage 514. Memory 504 may include volatile memory 506 and non-volatile memory 508. Computer 510 may include - or have access to a computing environment that includes - a variety of computer-readable media, such as volatile memory 506 and non-volatile memory 508, removable storage 512 and non-removable storage 514. Computer storage includes random access memory (RAM), read only memory (ROM), erasable programmable read-only memory (EPROM) & electrically erasable programmable read-only memory (EEPROM), flash memory or other memory technologies, compact disc read-only memory (CDROM), Digital Versatile Disks (DVD) or other optical disk storage, magnetic cassettes, magnetic tape, magnetic disk storage or other magnetic storage devices, or any other medium capable of storing computer-readable instructions. Computer 510 may include or have access to a computing environment that includes input 516, output 518, and a communication connection 520. The computer may operate in a networked environment using a communication connection to connect to one or more remote computers, such as database servers. The remote computer may include a personal computer (PC), server, router, network PC, a peer device or other common network node, or the like. The communication connection may include a Local Area Network (LAN), a Wide Area Network (WAN) or other networks.

Another embodiment is in the form of a system that may be implemented on one or more computers, such as computer 510. Such a system includes at least one processor, at least one memory device, and at least one network interface device. The system further includes a first computer management system stored on the at least one memory device and executable by the at least one processor to receive network entity specific metric messages broadcast on a first computer network by network entities. The system further includes a metric message connector module stored on the at least one memory device and executable by the at least one processor.

The metric message connector module is executable by the at least one processor to perform different data processing tasks. Such data processing tasks may include processing network entity specific metric messages received by the first computer management system to identify, based on configuration data and data of the received network entity specific metric messages, network entity specific metric messages to be forwarded to a second computer management system on a second computer network. Further, for each received network entity specific metric message identified to be forwarded to the second computer management system, the metric message connector module may perform additional data processing tasks.

The addition data processing tasks of the metric message connector module, with regard to one or more network entity specific metric messages identified to be forwarded to the second computer management system may include retrieving, from the at least one memory device, a template to populate with at least a portion of data of the one or more identified network entity specific metric messages and mapping data that maps the at least the portion of the data of the one or more identified network entity specific metric messages to fields of the template. The template may be XML template. The metric message connector module may then populate the template with the at least the portion of the data of the one or more identified network entity specific metric messages according to the mapping data. Once the template is populated, the metric message connector module may then transmit, via the at least one network interface device, the first and the second computer networks the populated template to the second computer management system on the second computer network. The metric message connector module may transmit the populated (XML) template encoded within a SOAP message.

Computer-readable instructions stored on a computer-readable medium are executable by the processing unit 502 of the computer 510. A hard drive, CD-ROM, and RAM are some examples of articles including a non-transitory computer-readable medium. For example, a computer program 525 capable of performing one or more of the methods illustrated and described herein may be stored on a non-transitory computer-readable medium, such as a metric message connector 304 of FIG. 3.

Another embodiment is in the form of a method. The method in such an embodiment includes receiving, via a computer network, a network entity specific metric message from a first computer management system. The network entity specific metric message may be received in a standards based format or in a format of the first computer management system that is different than a format of a second computer management system to which a representation of the received message is to be transmitted. The formats of the first and second computer management systems may be proprietary to their respective systems. However, in other embodiments, the formats of the first and second computer management systems may actually be identical.

This method further includes determining, based on configuration data and data of the received network entity specific metric message, that the received network entity specific metric message is to be forwarded to the second computer management system. When the received network entity specific metric message is to be forwarded to the second computer management system, the method includes identifying a format for transmitting at least a portion of data of the received network entity specific metric message to the second computer management system. The identified format may be a format of a simple network management protocol message.

The method may then generate a message including data representative of the received network entity specific metric message according to the identified format for transmitting to the second computer management system. The generated message may then be transmitted, via the computer network, to the second computer management system. Transmitting the generated message may include transmitting the generated message via the computer network in an **API** call to an API of the second computer management system.

## Claims

1. A computer implemented method for optimization of a computer network traffic between network entities on a first computer network (114) and a computer management system (102) on a second computer network (106), wherein the network entities are being monitored by the computer management system, the method comprising:
receiving, by another computer management system via the first computer network, one or more network entity specific metric messages from one or
more network entities, wherein each network entity is being operable for sending via the first computer network the each network entity specific metric messages (402);
determining, based on configuration data and data of one or more received network entity specific metric messages, that at least one received network entity specific metric message is to be forwarded to the computer management system (404); and
when the at least one received network entity specific metric message is to be forwarded to the computer management system (406):
retrieving a template to populate with at least a portion of data of the at least one received network entity specific metric message to be forwarded to the computer management system and mapping data that maps the at least the portion of the data of the at least one received network entity specific metric message to be forwarded to the computer management system to fields of the template (408);
populating the template according to the mapping data (401);
transmitting via the first and second computer network the populated template to the computer management system (412);
wherein the method is **characterized in that** it comprises:
prior to transmitting the populated template to the computer management system storing the populated template to a local log data storage (316) on the first computer network;
receiving a confirmation that the populated template was received by the computer management system; and
deleting the populated template from the local log data storage after the receiving of the confirmation that the populated template was received by the computer management system,
wherein either the first and the second computer network are connected via a cellular digital telecommunication network (110) or the second computer network is the cellular digital telecommunication network,
wherein data packets having a data volume size are used for data transfer in the cellular digital telecommunication network, wherein the transmitting via the first and second computer network of the populated template to the computer management system comprises converting the populated template into the data packet by adding at least a header information of said data packet to the populated template, wherein the populating of the template according to the mapping data is continued until a maximum utilization efficiency of the data volume size of the data packet to be generated using said template being populated is achieved, wherein one universal template is used for mapping of the data that maps the at least the portion of the data of any received network entity specific metric message to be forwarded to the computer management system to fields of the universal template, wherein the network entity specific metric message is a Simple Network Management Protocol, SNMP, message attributed to a specific type, wherein the universal template is compatible with the network entity specific metric messages attributed to all of the specific types.

2. The method of claim 1, wherein the types of the network entity specific metric messages are stored on a local data storage, wherein when at least one received network entity specific metric message attributed to a new specific type not yet stored on the local data storage is to be forwarded to the computer management system:
before the retrieving of the universal template to populate with at least a portion of data of the at least one received network entity specific metric message of the new specific type to be forwarded to the computer management system and the mapping of data that maps at least the portion of the data of the at least one received network entity specific metric message of the new specific type to be forwarded to the computer management system to fields of the universal template generating a new universal template compatible with the network entity specific metric messages attributed to all new specific types and the network entity specific metric messages attributed to the specific types stored on the local data storage; storing all new specific types on the local data storage;
when the universal template is not populated according to the mapping data substituting the universal template with the newly generated universal template; and
when the universal template is already partially populated according to the mapping data and the maximum utilization efficiency of the data volume size of the data packet to be generated using said universal template being populated is not yet achieved:
transmitting via the first and the second computer networks the partially populated universal template to the computer management system; and
after the transmitting via the first and the second computer networks of the partially populated universal template to the computer management system substituting the universal template with the newly generated universal template.

3. The method of any one of the preceding claims, wherein:
the template comprises an extensible markup language, XML, template; and
the transmitting of the populated template comprises transmitting the XML template in a Simple Object Access Protocol, SOAP, message to a web service providing at least one messaging service with regard to the computer management system.

4. The method of any one of the preceding claims, wherein the first and second computer networks are separated by at least one firewall.

5. The method of any one of the preceding claims, wherein the configuration data:
identifies at least the portion of the data of the at least one received network entity specific metric messages to be forwarded to the computer management system;
and provides the mappings of at least the portion of the data of the at least one received network entity specific metric messages to be forwarded to the computer management system to fields of the template; and
includes connectivity information to connect with the computer management system.

6. The method of claim 5, wherein the header information comprises the connectivity information.

7. The method of claims 6 or 5, wherein the configuration data is one of a plurality of sets of configuration data, the configuration data of each set of configuration data with regard to the computer management system identifying one of a plurality of computer management systems.

8. A computer program product, the computer program product carrying computer executable code for execution by a processor controlling an apparatus, wherein execution of the instructions cause the processor to perform the computer implemented method for optimization of a computer network traffic between network entities on a first computer network and a computer management system on a second computer network according to any of claims 1 -7.

9. A system comprising:
at least one processor, at least one memory device, and at least one network interface device (104); and
a first computer management system (118) stored on the at least one memory device and executable by the at least one processor to receive network entity specific metric messages broadcast on a first computer network (114) by network entities;
a metric message connector module (116) stored on the at least one memory device and executable by the at least one processor to:
process metric messages received by the first computer management system (402) to identify (404), based on configuration data and data of the received network entity specific metric messages, network entity specific metric messages to be forwarded (406) to a second computer management system (102) on a second computer network (106); and
for one or more received network entity specific metric messages identified to be forwarded to the second computer management system:
retrieve (408), from the at least one memory device, a template (310) to populate with at least a portion of data of the one or more identified network entity specific metric messages and map data that maps the at least the portion of the data of the one or more identified network entity specific metric messages to fields of the template;
populate (410) the template (310) with the at least the portion of the data of the one or more identified network entity specific metric messages according to the mapping data;
transmit (412), via the at least one network interface device, the first and the second computer networks the populated template to the second computer
management system;
**characterized in that** the metric message connector module (116) stored on the at least one memory device and executable by the at least one processor to:
store the populated template to a local log data storage (316) on the first computer network prior to transmitting the populated template to the second network and the second computer management system;
receive a confirmation that the populated template was received by the second network and the second computer management system; and
delete the populated template from the local log data storage (316) on the first computer network after the receiving of the confirmation that the populated template was received by the second network and the second computer management system,
wherein either the first and the second computer network are connected via a cellular digital telecommunication network (110) or the second computer network is the cellular digital telecommunication network,
wherein data packets having a data volume size are used for data transfer in the cellular digital telecommunication network, wherein the transmitting via the at least one network interface device, the first and second computer network of the populated template to the second computer management system comprises converting the populated template into the data packet by adding at least a header information of said data packet to the populated template, wherein the populating of the template according to the mapping data is continued until a maximum utilization efficiency of the data volume size of the data packet to be generated using said template being populated is achieved,
wherein one universal template is used for mapping of the data that maps at least the portion of data of any identified network entity specific metric message to fields of the universal template, wherein the network entity specific metric message is a Simple Network Management Protocol, SNMP, message attributed to a specific type, wherein the universal template is compatible with the network entity specific metric messages attributed to all of the specific types.

10. The system of claim 9, wherein the types of the network entity specific metric messages are stored on the at least one memory device,
the metric message connector module stored on the at least one memory device and is further executable by the at least one processor to:
when at least one received network entity specific metric message attributed to a new specific type not yet stored on the at least one memory device is identified to be forwarded to the second computer management system:
before the retrieving, from the at least one memory device, of the universal template to populate with the at least a portion of data of the at least one identified network entity specific metric message attributed to the new specific type not yet stored on the at least one memory device and the mapping of data that maps at least the portion of the data of the at least one identified network entity specific metric message to fields of the universal template generate a new universal template compatible with the network entity specific metric messages attributed to all new specific types and the network entity specific metric messages attributed to the specific types stored on the at least one memory device and store all new specific types on the at least one memory device;
when the universal template is not populated according to the mapping data substitute the universal template with the newly generated universal template; and
when the universal template is already partially populated according to the mapping data and the maximum utilization efficiency of the data volume size of the data packet to be generated using said template being populated is not yet achieved:
transmit via the at least one network interface device, the first and second networks the partially populated universal template to the second computer management system; and
after the transmitting via the at least one network interface device, the first and second networks of the partially populated universal template to the second computer management system substitute the template with the newly generated universal template.

11. The system of any one of the preceding claims 10 or 9, wherein:
the template comprises an extensible markup language, XML, template; and
the transmitting of the populated template comprises transmitting the XML template in a Simple Object Access Protocol, SOAP, message to a web service providing at least one messaging service with regard to the second computer management system.

12. The system of any one of the preceding claims 9 - 11, wherein the configuration data:
identifies at least a portion of data of one or more received network entity specific metric messages to be forwarded to the second computer management system;
provides the mappings of at least the portion of the data of the one or more received network entity specific metric messages data to fields of the template; and
includes connectivity information to connect with the second computer management system.

13. The system of claim 12, wherein the configuration data is one of a plurality of sets of configuration data, the configuration data of each set of configuration data with regard to the second computer management system identifying one of a plurality of second computer management systems.

14. The system of claims 12 or 13, wherein the header information comprises the connectivity information.

## Patentansprüche

1. Computerimplementiertes Verfahren zur Optimierung des Datenverkehrs in einem Computernetzwerk zwischen Netzwerkeinheiten auf einem ersten Computernetzwerk (114) und einem Computermanagementsystem (102) auf einem zweiten Computernetzwerk (106), wobei die Netzwerkeinheiten durch das Computermanagementsystem gesteuert werden, wobei das Verfahren Folgendes umfasst:
Empfangen, von einem weiteren Computermanagementsystem über das erste Computernetzwerk, einer oder mehrerer netzwerkeinheitsspezifischer Metriknachricht(en) von einer oder mehreren Netzwerkeinheit(en), wobei jede Netzwerkeinheit zum Senden jeder netzwerkeinheitsspezifischen Metriknachricht (402) über das erste Computernetzwerk betriebsbereit ist;
Entscheiden, basierend auf Konfigurationsdaten und Daten einer oder mehrerer empfangenen netzwerkeinheitsspezifischen Metriknachricht(en), dass mindestens eine empfangene netzwerkeinheitsspezifische Metriknachricht an das Computermanagementsystem (404) weitergeleitet werden soll; und,
wenn die mindestens eine empfangene netzwerkeinheitsspezifische Metriknachricht an das Computermanagementsystem (406) weitergeleitet werden soll:
Wiederherstellen eines Templates, das mit mindestens einem Teil der Daten der mindestens einen empfangenen netzwerkeinheitsspezifischen Metriknachricht, die an das Computermanagementsystem weitergeleitet werden soll, gefüllt werden soll, und Mapping von Daten, das den mindestens einen Teil der Daten der mindestens einen empfangenen netzwerkeinheitsspezifischen Metriknachricht, die an das Computermanagementsystem weitergeleitet werden soll, in Felder des Templates (408) mappt;
Füllen des Templates gemäß den Mapping-Daten (401);
Übertragen des gefüllten Templates an das Computermanagementsystem (412) über das erste und zweite Computernetzwerk;
wobei das Verfahren **dadurch gekennzeichnet ist, dass** es Folgendes umfasst:
vor dem Übertragen des gefüllten Templates an das Computermanagementsystem Speichern des gefüllten Templates in einem lokalen Protokolldatenspeicher (316) auf dem ersten Computernetzwerk;
Empfangen einer Bestätigung darüber, dass das gefüllte Template von dem Computermanagementsystem empfangen wurde; und
Löschen des gefüllten Templates von dem lokalen Protokolldatenspeicher nach dem Empfangen der Bestätigung darüber, dass das gefüllte Template von dem Computermanagementsystem empfangen wurde,
wobei entweder das erste und das zweite Computernetzwerk über ein zelluläres digitales Telekommunikationsnetzwerk (110) verbunden sind oder das zweite Computernetzwerk ein zelluläres digitales Telekommunikationsnetzwerk ist, wobei Datenpakete, die eine Datenvolumengröße aufweisen, zum Datentransfer in dem zellulären digitalen Telekommunikationsnetzwerk verwendet werden, wobei das Übertragen des gefüllten Templates über das erste und zweite Computernetzwerk an das Computermanagementsystem Konvertieren des gefüllten Templates in das Datenpaket umfasst, indem mindestens eine Header-Information des Datenpakets zu dem gefüllten Template hinzugefügt wird, wobei das Füllen des Templates gemäß den Mapping-Daten fortgeführt wird, bis eine maximale Nutzungseffizienz der Datenvolumengröße des Datenpakets, das unter Verwendung des Templates, das gefüllt wird, erzeugt werden soll, erreicht wurde, wobei ein Universal-Template zum Mapping der Daten, das mindestens den Teil der Daten einer beliebigen empfangenen netzwerkeinheitsspezifischen Metriknachricht, die an das Computermanagementsystem weitergeleitet werden soll, in Felder des Universal-Templates mappt, verwendet wird, wobei die netzwerkeinheitsspezifische Metriknachricht eine einer bestimmten Art zugeordnete Simple Network Management Protocol-Nachricht, SNMP-Nachricht, ist, wobei das Universal-Template mit den netzwerkeinheitsspezifischen Metriknachrichten, die allen spezifischen Arten zugeordnet sind, kompatibel ist.

2. Verfahren nach Anspruch 1, wobei die Arten der netzwerkeinheitsspezifischen Metriknachrichten auf einem lokalen Datenspeicher gespeichert sind, wobei, wenn mindestens eine empfangene netzwerkeinheitsspezifische Metriknachricht, die einer neuen spezifischen Art, die noch nicht auf dem lokalen Datenspeicher gespeichert ist, zugeordnet ist, an das Computermanagementsystem weitergeleitet werden soll:
vor dem Wiederherstellen des Universal-Templates, das mit mindestens einem Teil der Daten der mindestens einen empfangenen netzwerkeinheitsspezifischen Metriknachricht der neuen spezifischen Art, die an das Computermanagementsystem weitergeleitet werden soll, gefüllt werden soll, und dem Mapping von Daten, das mindestens einen Teil der Daten der mindestens einen empfangenen netzwerkeinheitsspezifischen Metriknachricht der neuen spezifischen Art, die an das Computermanagementsystem weitergeleitet werden soll, in Felder des Universal-Templates mappt, Erzeugen eines neuen Universal-Templates, das mit den netzwerkeinheitsspezifischen Metriknachrichten, die allen neues spezifischen Arten zugeordnet sind, und den netzwerkeinheitsspezifischen Metriknachrichten, die den spezifischen auf dem lokalen Datenspeicher gespeicherten Arten zugeordnet sind, kompatibel ist;
wenn das Universal-Template nicht gemäß den Mapping-Daten gefüllt wird, Ersetzen des Universal-Templates mit dem neu erzeugten Universal-Template; und
wenn das Universal-Template bereits teilweise gemäß den Mapping-Daten gefüllt wird und die maximale Nutzungseffizienz der Datenvolumengröße des Datenpakets, das unter Verwendung des Universal-Templates, das gefüllt wird, erzeugt werden soll, noch nicht erreicht wurde:
Übertragen des teilweise gefüllten Universal-Templates auf das Computermanagementsystem über das erste und das zweite Computernetzwerk; und
nach dem Übertragen des teilweise gefüllten Universal-Templates an das Computermanagementsystem über das erste und das zweite Computernetzwerk, Ersetzen des Universal-Templates mit dem neu erzeugten Universal-Template.

3. Verfahren nach einem der vorhergehenden Ansprüche, wobei:
das Template ein Extensible Markup Language-Template, XML-Template, umfasst; und
das Übertragen des gefüllten Templates das Übertragen des XML-Templates in einer Simple Open Access Protocol-Nachricht, SOAP-Nachricht, an einen Webservice, der mindestens einen Messaging-Service in Bezug auf das Computermanagementsystem bereitstellt, umfasst.

4. Verfahren nach einem der vorhergehenden Ansprüche, wobei das erste und zweite Computernetzwerk durch mindestens eine Firewall voneinander getrennt sind.

5. Verfahren nach einem der vorhergehenden Ansprüche, wobei die Konfigurationsdaten:
mindestens den Teil der Daten der mindestens einen empfangenen netzwerkeinheitsspezifischen Metriknachricht, die an das Computermanagementsystem weitergeleitet werden soll, identifizieren;
und die Mappings von mindestens dem Teil der Daten der mindestens einen empfangenen netzwerkeinheitsspezifischen Metriknachricht, die an das Computermanagementsystem weitergeleitet werden soll, in Felder des Templates bereitstellen; und
Konnektivitätsinformationen, um sich mit dem Computermanagementsystem zu verbinden, umfassen.

6. Verfahren nach Anspruch 5, wobei die Header-Informationen die Konnektivitätsinformationen umfassen.

7. Verfahren nach Anspruch 6 oder 5, wobei die Konfigurationsdaten zu einem von mehreren Konfigurationsdatensätzen gehören, wobei die Konfigurationsdaten jedes Konfigurationsdatensatzes in Bezug auf das Computermanagementsystem eines von mehreren Computermanagementsystemen identifizieren.

8. Computerprogrammprodukt, wobei das Computerprogrammprodukt computerausführbaren Code zur Ausführung durch einen Prozessor, der ein Gerät steuert, enthält, wobei die Ausführung der Befehle bewirkt, dass der Prozessor das computerimplementierte Verfahren zur Optimierung des Datenverkehrs in einem Computernetzwerk zwischen Netzwerkeinheiten auf einem ersten Computernetzwerk und einem Computermanagementsystem auf einem zweiten Computernetzwerk nach einem der Ansprüche 1-7 durchführt.

9. System, das Folgendes umfasst:
mindestens einen Prozessor, mindestens eine Speichervorrichtung und mindestens eine Netzwerkschnittstellenvorrichtung (104); und
ein erstes Computermanagementsystem (118), das auf der mindestens einen Speichervorrichtung gespeichert ist und durch den mindestens einen Prozessor ausführbar ist, um Übertragung von netzwerkeinheitsspezifischen Metriknachrichten auf einem ersten Computernetzwerk (114) durch Netzwerkeinheiten zu empfangen;
ein Verbindermodul für Metriknachrichten (116), das auf der mindestens einen Speichervorrichtung gespeichert ist und durch den mindestens einen Prozessor ausführbar ist, um:
durch das erste Computermanagementsystem (402) empfangene Metriknachrichten zu verarbeiten, um netzwerkeinheitsspezifische Metriknachrichten, die an ein zweites Computermanagementsystem (102) auf einem zweiten Computernetzwerk (106) weitergeleitet werden sollen, basierend auf Konfigurationsdaten und Daten der empfangenen netzwerkeinheitsspezifischen Metriknachrichten zu identifizieren (404); und
für eine oder mehrere empfangene netzwerkeinheitsspezifische Metriknachrichten, die identifiziert werden, um an das zweite Computermanagementsystem weitergeleitet zu werden:
von der mindestens einen Speichervorrichtung ein Template (310), das mit mindestens einem Teil der Daten der einen oder mehreren identifizierten netzwerkeinheitsspezifischen Metriknachricht(en) gefüllt werden soll, wiederherzustellen (408) und Daten zu mappen,
wodurch mindestens der Teil der Daten der einen oder der mehreren identifizierten netzwerkeinheitsspezifischen Metriknachricht(en) in Felder des Templates gemappt werden;
das Template (310) mit mindestens dem Teil der Daten der einen oder mehreren identifizierten netzwerkeinheitsspezifischen Metriknachricht(en) gemäß den Mapping-Daten zu füllen (410);
das gefüllte Template über die mindestens eine Netzwerkschnittstellenvorrichtung, das erste und zweite Computernetzwerk, an das zweite Computermanagementsystem zu übertragen (412);
**dadurch gekennzeichnet, dass** das Verbindermodul für Metriknachrichten (116), das auf der mindestens einen Speichervorrichtung gespeichert ist und durch den mindestens einen Prozessor ausführbar ist, um:
das gefüllte Template in einem lokalen Protokolldatenspeicher (316) auf dem ersten Computernetzwerk vor dem Übertragen des gefüllten Templates an das zweite Netzwerk und das zweite Computermanagementsystem zu speichern;
eine Bestätigung darüber, dass das gefüllte Template von dem zweiten Netzwerk und dem zweiten Computermanagementsystem empfangen wurde, zu empfangen; und
das gefüllte Template von dem lokalen Protokolldatenspeicher (316) auf dem ersten Computernetzwerk nach dem Empfangen der Bestätigung darüber, dass das gefüllte Template von dem zweiten Netzwerk und dem zweiten Computermanagementsystem empfangen wurde, zu löschen,
wobei entweder das erste und das zweite Computernetzwerk über ein zelluläres digitales Telekommunikationsnetzwerk (110) verbunden werden oder das zweite Computernetzwerk das zelluläre digitale Telekommunikationsnetzwerk ist,
wobei Datenpakete, die eine Datenvolumengröße aufweisen, zum Datentransfer in dem zellulären digitalen Telekommunikationsnetzwerk verwendet werden, wobei das Übertragen über die mindestens eine Netzwerkschnittstellenvorrichtung des ersten und
zweiten Computernetzwerks des gefüllten Templates an das zweite Computermanagementsystem
Konvertieren des gefüllten Templates in das Datenpaket umfasst, indem mindestens eine Header-Information des Datenpakets zu dem gefüllten Template hinzugefügt wird, wobei das Füllen des Templates gemäß den Mapping-Daten fortgeführt wird, bis eine maximale Nutzungseffizienz der Datenvolumengröße des Datenpakets, das unter Verwendung des Templates, das gefüllt wird, erzeugt werden soll, erreicht wurde,
wobei ein Universal-Template zum Mapping der Daten, das mindestens den Teil der Daten einer beliebigen identifizierten netzwerkeinheitsspezifischen Metriknachricht in Felder des Universal-Templates mappt, verwendet wird, wobei die netzwerkeinheitsspezifische Metriknachricht eine einer bestimmten Art zugeordnete Simple Network Management Protocol-Nachricht, SNMP-Nachricht, ist, wobei das Universal-Template mit den netzwerkeinheitsspezifischen Metriknachrichten, die allen spezifischen Arten zugeordnet sind, kompatibel ist.

10. System nach Anspruch 9, wobei die Arten der netzwerkeinheitsspezifischen Metriknachrichten auf der mindestens einen Speichervorrichtung gespeichert sind, das Verbindermodul für Metriknachrichten auf der mindestens einen Speichervorrichtung gespeichert ist und ferner durch den mindestens einen Prozessor ausführbar ist, um:
wenn mindestens eine empfangene netzwerkeinheitsspezifische Metriknachricht, die einer neuen spezifischen Art, die noch nicht auf der mindestens einen lokalen Speichervorrichtung gespeichert ist, zugeordnet ist, identifiziert wird, um an das zweite Computermanagementsystem weitergeleitet zu werden:
vor dem Wiederherstellen von der mindestens einen Speichervorrichtung des Universal-Templates, das mit dem mindestens einem Teil der Daten der mindestens einen identifizierten netzwerkeinheitsspezifischen Metriknachricht, die der neuen spezifischen Art, die noch nicht auf der mindestens einen Speichervorrichtung gespeichert ist, zugeordnet ist, gefüllt werden soll, und dem Mapping von Daten, das mindestens den Teil der Daten der mindestens einen identifizierten netzwerkeinheitsspezifischen Metriknachricht in Felder des Universal-Templates mappt, ein neues Universal-Template, das mit den netzwerkeinheitsspezifischen Metriknachrichten, die allen neuen spezifischen Arten zugeordnet sind, und den netzwerkeinheitsspezifischen Metriknachrichten, die den spezifischen auf der mindestens einen Speichervorrichtung gespeicherten Arten zugeordnet sind, kompatibel ist, zu erzeugen, und alle neuen spezifischen Arten der mindestens einen Speichervorrichtung zu speichern;
wenn das Universal-Template nicht gemäß den Mapping-Daten gefüllt wird, das Universal-Template mit dem neu erzeugten Universal-Template zu ersetzen; und wenn das Universal-Template bereits teilweise gemäß den Mapping-Daten gefüllt wird und die maximale Nutzungseffizienz der Datenvolumengröße des Datenpakets, das unter Verwendung des Universal-Templates, das gefüllt wird, erzeugt werden soll, noch nicht erreicht wurde:
das teilweise gefüllte Universal-Template über die mindestens eine Netzwerkschnittstellenvorrichtung, das erste und zweite Netzwerk, auf das zweite Computermanagementsystem zu übertragen; und
nach dem Übertragen des ersten und zweiten Netzwerks des teilweise gefüllten Universal-Templates auf das zweite Computermanagementsystem über die mindestens eine Netzwerkschnittstellenvorrichtung das Template mit dem neu erzeugten Universal-Template zu ersetzen.

11. System nach einem der vorhergehenden Ansprüche 10 oder 9, wobei:
das Template ein Extensible Markup Language-Template, XML-Template, umfasst; und
das Übertragen des gefüllten Templates das Übertragen des XML-Templates in einer Simple Open Access Protocol-Nachricht, SOAP-Nachricht, an einen Webservice, der mindestens einen Messaging-Service in Bezug auf das zweite
Computermanagementsystem bereitstellt, umfasst.

12. System nach einem der vorhergehenden Ansprüche 9-11, wobei die Konfigurationsdaten:
mindestens einen Teil der Daten einer oder mehrerer empfangenen netzwerkeinheitsspezifischen Metriknachricht(en), die an das zweite Computermanagementsystem weitergeleitet werden soll/sollen, identifizieren;
die Mappings von mindestens dem Teil der Daten der einen oder der mehreren empfangenen netzwerkeinheitsspezifischen Metriknachricht(en) in Felder des Templates bereitstellen; und
Konnektivitätsinformationen, um sich mit dem zweiten Computermanagementsystem zu verbinden, umfassen.

13. System nach Anspruch 12, wobei die Konfigurationsdaten zu einem von mehreren Konfigurationsdatensätzen gehören, wobei die Konfigurationsdaten jedes Konfigurationsdatensatzes in Bezug auf das zweite Computermanagementsystem eines von mehreren zweiten Computermanagementsystemen identifizieren.

14. System nach Anspruch 12 oder 13, wobei die Header-Informationen die Konnektivitätsinformationen umfassen.

## Revendications

1. Procédé mis en oeuvre par ordinateur pour l'optimisation d'un trafic réseau informatique entre des entités de réseau sur un premier réseau informatique (114) et un système de gestion informatique (102) sur un second réseau informatique (106), où les entités de réseau sont surveillées par le système de gestion informatique, le procédé comprenant :
la réception, par un autre système de gestion informatique, par le biais du premier réseau informatique, d'un ou de plusieurs messages métriques spécifiques à une entité de réseau à partir d'une ou de plusieurs entités de réseau, où chaque entité de réseau peut fonctionner pour l'envoi, par le biais du premier réseau informatique, de messages métriques spécifiques à chaque entité de réseau (402) ;
la détermination, sur la base de données de configuration et de données d'un ou de plusieurs messages métriques spécifiques à l'entité de réseau reçue qu'au moins un message métrique spécifique à l'entité de réseau reçu doit être transmis au système de gestion informatique (404) ; et
lorsque l'au moins un message métrique spécifique à l'entité de réseau reçu doit être transmis au système de gestion informatique (406) :
la récupération d'un modèle à remplir avec au moins une partie de données de l'au moins un message métrique spécifique à l'entité de réseau reçu devant être transmis au système de gestion informatique et la mise en correspondance d'une donnée qui fait correspondre l'au moins un message métrique spécifique à l'entité de réseau reçu devant être transmis au système de gestion informatique à des champs du modèle (408) ;
le remplissage du modèle selon les données de mise en correspondance (401) ;
la transmission, par le biais du premier et du second réseau informatique du modèle rempli, au système de gestion informatique (412) ;
où le procédé est **caractérisé en ce qu'**il comprend :
avant la transmission du modèle rempli au système de gestion informatique, le stockage du modèle rempli au niveau d'un stockage de données de connexion local (316) sur le premier réseau informatique ;
la réception d'une confirmation que le modèle rempli a été reçu par le système de gestion informatique ; et
l'effacement du modèle rempli du stockage de données de connexion local après que la réception de la confirmation que le modèle rempli ait été reçue par le système de gestion informatique,
où soit les premier et second réseaux informatiques sont connectés par le biais d'un réseau de télécommunication numérique cellulaire (110), soit le second réseau informatique est le réseau de télécommunication numérique cellulaire,
où des paquets de données ayant une taille en volume de données sont utilisés pour le transfert de données dans le réseau de télécommunication numérique cellulaire, où la transmission, par le biais des premier et second réseaux informatiques du modèle rempli vers le système de gestion informatique, comprend la conversion du modèle rempli en un paquet de données en ajoutant au moins une information d'en-tête dudit paquet de données au modèle rempli, où le remplissage du modèle selon les données de correspondance est poursuivi jusqu'à ce qu'une efficacité d'utilisation maximale de la taille en volume de données du paquet de données devant être généré en utilisant ledit modèle étant rempli est atteinte, où un modèle universel est utilisé pour la mise en correspondance de la donnée qui fait correspondre l'au moins une partie des données d'un quelconque message métrique spécifique à une entité de réseau reçu devant être transmis au système de gestion informatique avec des champs du modèle universel, où le message métrique spécifique à l'entité de réseau est un message par protocole de gestion de réseau simple, SNMP, attribué à un type spécifique, où le modèle universel est compatible avec les messages métriques spécifiques aux entités de réseau attribués à tous les types spécifiques.

2. Procédé selon la revendication 1, dans lequel les types des messages métriques spécifiques aux entités de réseau sont stockés sur un stockage de données local, où, lorsqu'au moins un message métrique spécifique à une entité de réseau reçu attribué à un nouveau type spécifique non encore stocké sur le stockage de données local doit être transmis au système de gestion informatique :
avant la récupération du modèle universel à remplir avec au moins une partie des données de l'au moins un message métrique spécifique à l'entité de réseau reçu du nouveau type spécifique à transmettre au système de gestion informatique et la mise en correspondance de la donnée qui correspond à au moins une partie des données de l'au moins un message métrique spécifique à une entité de donnée du nouveau type spécifique à transmettre au système de gestion informatique à des champs du modèle universel, la génération d'un nouveau modèle universel compatible avec les messages métriques spécifiques aux entités de réseau attribués à tous les types spécifiques et les messages métriques spécifiques aux entités de réseau attribués à des types spécifiques stockés sur le stockage de données local ;
le stockage de tous les types spécifiques sur le stockage de données local ;
lorsque le modèle universel n'est pas rempli selon les données de mise en correspondance, la substitution du modèle universel avec un modèle universel nouvellement généré ; et
lorsque le modèle universel est déjà partiellement rempli selon les données de mise en correspondance et que l'efficacité d'utilisation maximale de la taille en volume de données du paquet de données devant être généré en utilisant ledit modèle universel étant rempli n'est encore atteinte :
la transmission, par le biais des premier et second réseaux informatiques du modèle universel partiellement rempli vers le système de gestion informatique ; et
après la transmission par le biais des premier et second systèmes informatiques du modèle universel partiellement rempli vers le système de gestion informatique, la substitution du modèle universel par un modèle universel nouvellement créé.

3. Procédé selon l'une quelconque des revendications précédentes, dans lequel :
le modèle comprend un modèle de langage de balisage extensible XML ; et
la transmission du modèle rempli comprend le modèle XML dans un message de protocole d'accès à un objet simple, SOAP, vers un service de la toile procurant au moins un service de messagerie en relation avec le système de gestion informatique.

4. Procédé selon l'une quelconque des revendications précédentes, dans lequel les premier et second réseaux informatiques sont séparés par au moins un pare-feu.

5. Procédé selon l'une quelconque des revendications précédentes, dans lequel la donnée de configuration :
identifie au moins la partie des données de l'au moins un des messages métriques spécifiques à une entité de réseau reçu devant être transmis au système de gestion informatique ;
et procure les mises en correspondance de l'au moins une partie des données de l'au moins un des messages métriques spécifiques à une entité de réseau reçu pour être transmis au système de gestion informatique avec des champs du modèle ; et
comprend une information de connectivité pour se connecter avec le système de gestion informatique.

6. Procédé selon la revendication 5, dans lequel l'information d'en-tête comprend une information de connectivité.

7. Procédé selon les revendications 6 ou 5, dans lequel la donnée de configuration est une donnée d'une pluralité d'ensembles de données de configuration, la donnée de configuration de chaque ensemble de données de configuration par rapport au système de gestion informatique identifiant un système d'une pluralité de systèmes de gestion informatique.

8. Produit de programme informatique, le produit de programme informatique portant un code exécutable par ordinateur pour l'exécution par un processeur commandant un appareil, où l'exécution des instructions provoque la réalisation par le processeur du procédé mis en oeuvre par ordinateur pour l'optimisation d'un trafic de réseau informatique entre les entités de réseau sur un premier réseau informatique et un système de gestion informatique sur un second réseau informatique selon l'une quelconque des revendications 1 à 7.

9. Système comprenant :
au moins un processeur, au moins un dispositif mémoire et au moins un dispositif d'interface réseau (104) ; et
un premier système de gestion informatique (118) stocké sur au moins un dispositif mémoire et exécutable par au moins un processeur pour recevoir une diffusion de messages métriques spécifiques à une entité de réseau sur un premier réseau informatique (114) par des entités de réseau ;
un module connecteur de message métrique (116) stocké sur au moins un dispositif mémoire et exécutable par l'au moins un processeur pour :
traiter des messages métriques reçus par le premier système de gestion informatique (402) pour identifier (404), sur la base de données de configuration et de données des messages métriques spécifiques à une entité de réseau reçus, les messages métriques spécifiques à l'entité de réseau devant être transmis (406) à un second système de gestion informatique (102) sur un second réseau informatique (106) ; et
pour un ou plusieurs messages métriques spécifiques à une entité de réseau reçus identifiés pour être transmis au second système de gestion informatique :
récupérer (408), à partir de l'au moins un dispositif de mémoire, un modèle (310) à remplir avec au moins une partie des données du ou des messages métriques spécifiques à une entité de réseau identifié et de données de mise en correspondance d'au moins la partie des données du ou des messages métriques spécifiques à une entité de réseau identifiés avec des champs du modèle ;
remplir (410) le modèle (310) avec l'au moins une partie des données du ou des messages métriques spécifiques à l'entité de réseau identifié selon les données de mise en correspondance ;
transmettre (412), par le biais de l'au moins un dispositif d'interface de réseau, les premier et second réseaux informatiques, le modèle rempli au second système de
gestion informatique ;
**caractérisé en ce que** le module connecteur de message métrique (116) stocké sur l'au moins un dispositif de mémoire et exécutable par l'au moins un processeur pour :
stocker le modèle rempli au niveau d'un stockage de données de connexion local (316) sur le premier réseau informatique avant de transmettre le modèle rempli au second réseau informatique et un second système de gestion informatique ;
recevoir une confirmation que le modèle rempli a été reçu par le second réseau et le second système de gestion informatique ; et
effacer le modèle rempli du stockage de données de connexion local (316) sur le premier réseau informatique après la réception de la confirmation que le modèle rempli a été reçu par le second réseau et second système de gestion informatique, où, soit les premier et second réseaux informatiques sont connectés par le biais d'un réseau de télécommunication numérique cellulaire (110), soit le second réseau informatique est le réseau de télécommunication numérique cellulaire,
où des paquets de données ayant une taille en volume de données sont utilisés pour le transfert de données dans le réseau de télécommunication numérique cellulaire, où la transmission par le biais de l'au moins un dispositif d'interface réseau, des premier et
second réseaux informatiques du modèle rempli vers le système de gestion informatique comprend la conversion du modèle rempli en un paquet de données en ajoutant au moins une information d'en-tête dudit paquet de données au modèle rempli, où le remplissage du modèle selon les données de correspondance est poursuivi jusqu'à ce qu'une efficacité d'utilisation maximale de la taille en volume de données du paquet de données devant être généré en utilisant ledit modèle étant rempli est atteinte,
où un modèle universel est utilisé pour la mise en correspondance de la donnée qui fait correspondre l'au moins une partie des données d'un quelconque message métrique spécifique à une entité de réseau reçu avec des champs du modèle universel, où le message métrique spécifique à l'entité de réseau est un message par protocole de gestion de réseau simple, SNMP, attribué à un type spécifique, où le modèle universel est compatible avec les messages métriques spécifiques à l'entité de réseau attribués à tous les types spécifiques.

10. Système selon la revendication 9, dans lequel les types des messages métriques spécifiques à une entité de réseau sont stockés sur l'au moins un dispositif d'interface, le module connecteur de message métrique stocké sur l'au moins un dispositif de mémoire et est en outre exécutable par l'au moins un processeur pour :
lorsqu'au moins un message métrique spécifique à une entité de réseau reçu attribué à un nouveau type spécifique non encore stocké sur l'au moins un dispositif de mémoire est identifié pour être transmis au second système de gestion informatique :
avant la récupération, à partir de l'au moins un dispositif de mémoire, du modèle universel à remplir avec l'au moins une partie des données de l'au moins un message métrique spécifique à une entité de réseau identifié attribué au nouveau type spécifique non encore stocké sur l'au moins un dispositif de mémoire et la mise en correspondance de la donnée qui correspond au moins à la partie des données de l'au moins un message métrique spécifique à une entité de réseau identifié à des champs du modèle universel, générer un nouveau modèle universel compatible avec les messages métriques spécifiques à une entité de réseau et les messages métriques spécifique à une entité de réseau attribués aux types spécifiques sur l'au moins un dispositif de m moire ;
lorsque le modèle universel n'est pas rempli selon les données de mise en correspondance, substituer le modèle universel avec le modèle universel nouvellement créé ; et
lorsque le modèle universel est déjà partiellement rempli selon les données de mise en correspondance et l'efficacité d'utilisation maximale de la taille en volume de données du paquet de données à générer en utilisant ledit modèle étant rempli n'est pas atteinte :
transmettre, par le biais de l'au moins un dispositif d'interface réseau, les premier et second réseaux, le modèle universel partiellement rempli au second système de gestion informatique ; et
après la transmission, par le biais de l'au moins un dispositif d'interface de réseau, des premier et second réseaux du modèle universel partiellement rempli au second système de gestion informatique, substituer le modèle avec le modèle universel nouvellement créé.

11. Système selon l'une quelconque des revendications précédentes 10 ou 9, dans lequel :
le modèle comprend un modèle de langage de balisage extensible, XML, dans un message de protocole d'accès à un objet simple, SOAP, vers un service de la toile procurant au moins un service de messagerie par rapport au second système de gestion informatique.

12. Système selon l'une quelconque des revendications précédentes 9 à 11, dans lequel la donnée de configuration :
identifie au moins une partie des données d'un ou de plusieurs messages métriques spécifiques à une entité de réseau reçus devant être transmis au second système de gestion informatique ;
procure les mises en correspondances d'au moins la partie des données de l'un ou de plusieurs messages métriques spécifiques à une entité de réseau reçus avec des champs du modèle ; et
inclut une information de connectivité pour se connecter avec le second système de gestion informatique.

13. Système selon la revendication 12, dans lequel la donnée de configuration est l'une d'une pluralité d'ensembles de configuration, les données de configuration de chaque ensemble de données de configuration par rapport au second système de gestion informatique identifiant un système d'une pluralité de seconds systèmes de gestion informatique.

14. Système selon les revendications 12 ou 13, dans lequel l'information d'en-tête comprend l'information de connectivité.
